# EUROPÄISCHE PATENTANMELDUNG

(11) **EP 4 324 362 A1**
(43) Veröffentlichungstag der Anmeldung: **21.02.2024**
(21) Anmeldenummer: 23186167.5
(22) Anmeldetag: 18.07.2023
(51) Int. Cl.: A47J 27/00, A47J 36/32, H05B 6/06

(54) **FUNKTIONSGARGESCHIRR UND VERFAHREN ZUM BETREIBEN**

(30) Priorität: 16.08.2022 BE 202205636
(71) Anmelder: Miele & Cie. KG, 33332 Gütersloh (DE)
(72) Erfinder: Müller, Christoph, 32289 Rödinghausen (DE); Werneke, Dominik, 33615 Bielefeld (DE)

(57) **Zusammenfassung**

Das erfindungsgemäße Verfahren eignet sich zum Betreiben eines Funktionsgargeschirrs, wobei das Funktionsgargeschirr eine Bedienelektronik umfasst, wobei die Bedienelektronik eine Bedieneinrichtung, wenigstens eine Steuereinrichtung, eine Kommunikationseinrichtung, einen Lagesensor und einen Energiespeicher umfasst. Das Verfahren ist gekennzeichnet durch die folgenden Schritte:
- Überprüfung der Lage und/oder der Orientierung des Funktionsgargeschirrs nach einer erkannten Aktivierung der Bedienelektronik, wenn sich die Bedienelektronik im Standby-Modus befindet;
- Anschalten der Bedienelektronik, wenn eine zulässige Betriebslage erkannt wird; oder
- Verbleiben im Standby-Modus, wenn aufgrund einer unzulässigen Betriebslage auf eine versehentliche Aktivierung der Bedienelektronik geschlossen werden kann.

Das erfindungsgemäße Funktionsgargeschirrs umfasst eine Bedienelektronik, wobei die Bedienelektronik eine Bedieneinrichtung, eine Kommunikationseinrichtung, eine Steuereinrichtung, einen Lagesensor und einen Energiespeicher, wobei die Steuereinrichtung dazu geeignet und ausgebildet ist, das zuvor genannte Verfahren auszuführen.

## Beschreibung

Die vorliegende Erfindung betrifft ein Verfahren zum Betreiben eines Funktionsgargeschirrs, wobei das Funktionsgargeschirr insbesondere als Topf, Pfanne, Bräter oder dergleichen ausgebildet ist. Dabei umfasst das Funktionsgargeschirr wenigstens eine Bedienelektronik, wobei die Bedienelektronik wenigstens eine Bedieneinrichtung, wenigstens eine Steuereinrichtung, wenigstens eine Kommunikationseinrichtung, wenigstens einen Lagesensor und wenigstens einen Energiespeicher umfasst. Die vorliegende Erfindung betrifft zudem ein Funktionsgargeschirr.

Im Stand der Technik ist eine Vielzahl von unterschiedlichen Kochsystemen bekannt geworden, welche einen Benutzer bei der Zubereitung von Nahrungsmitteln bzw. Speisen unterstützen und/oder bei denen ein Kochvorgang sogar weitgehend vollständig von Automatikprogrammen gesteuert wird. So gibt es beispielsweise Systeme, bei denen sensorische Komponenten eingesetzt werden, um eine Temperatur in einem Gargeschirr wie z. B. einem Topf und/oder in einer Pfanne und/oder dergleichen zu ermitteln und so einen Kochvorgang zu überwachen und/oder einem Benutzer ziel- und zeitgenau beim Erreichen eines gewünschten und insbesondere optimalen Garergebnisses behilflich zu sein. Solches Gargeschirr wird in der Regel auch "smartes" Gargeschirr oder auch Funktionsgargeschirr genannt.

Insbesondere ist es bei solchen Systemen in der Regel nötig und/oder erwünscht, dass die Systemkomponenten wie z. B. ein Kochfeld, ein Kochgeschirr und/oder eine Steuereinrichtung drahtlos miteinander kommunizieren, um Informationen, Daten und/oder Steuerbefehle auszutauschen.

Damit ein Benutzer ein besonders komfortables Kocherlebnis genießen kann, ist je nach Ausgestaltung auch eine Bedienung bzw. eine Steuerung des Kochvorgangs über entsprechende Bedienelemente an dem Gargeschirr möglich und/oder es ist eine Anzeige an dem Gargeschirr vorgesehen, auf welcher dem Benutzer Informationen angeboten werden oder es können auch Softkeys beispielsweise auf einem Touch-Display angezeigt werden.

All diese Funktionen benötigen Energie, welche in der Regel in der Form eines Energiespeichers wie z. B. einer Batterie bereitgestellt wird. Damit eine besonders komfortable Benutzung des Gargeschirrs ermöglicht wird, ist es notwendig, dass die Lade- und/oder Austauschintervalle des Energiespeichers möglichst groß sind. Dies setzt voraus, dass das Gargeschirr möglichst wenig Energie verbraucht.

Nachteilig bei bekannten Systemen ist jedoch, dass es versehentliche Aktivierung des Gargeschirrs beispielsweise beim Abstellen des Gargeschirrs in einem Schrank oder einer Schublade oder beim Entnehmen eines Gargeschirrs auf Dauer enorm den Energiespeicher belasten kann. Dies ist immer der Fall, wenn das Gargeschirr ungewollt aus einem Standby-Modus in den Betriebszustand überführt wird. So können beispielsweise auch Wassertropfen in der Spülmaschine oder auch das Spülen von Hand eine versehentliche Aktivierung bewirken.

Durch ungewollte Aktivierungen wird der Energiespeicher unnötig schnell entladen, was in Bezug auf die Auflade- und/oder Wechselintervalle sehr nachteilig ist.

Es ist daher die Aufgabe der vorliegenden Erfindung, ein Funktionsgargeschirr zur Verfügung zu stellen, welches einen besonders geringen Energieverbrauch aufweist.

Diese Aufgabe wird gelöst durch ein Verfahren zum Betreiben eines Funktionsgargeschirrs mit den Merkmalen des Anspruchs 1 und durch ein Funktionsgargeschirr mit den Merkmalen des Anspruches 8. Bevorzugte Weiterbildungen der Erfindung sind Gegenstand der Unteransprüche. Weitere Vorteile und Merkmale der Erfindung ergeben sich aus den Ausführungsbeispielen.

Das erfindungsgemäße Verfahren eignet sich zum Betreiben eines Funktionsgargeschirrs, wobei das Funktionsgargeschirr insbesondere als Topf, Pfanne, Bräter oder dergleichen ausgebildet ist. Das Funktionsgargeschirr umfasst wenigstens eine Bedienelektronik, welche wenigstens eine Bedieneinrichtung, wenigstens eine Steuereinrichtung, wenigstens eine Kommunikationseinrichtung, wenigstens einen Lagesensor und wenigstens einen Energiespeicher umfasst. Das erfindungsgemäße Verfahren ist gekennzeichnet durch die folgenden Schritte: die Lage und/oder die Orientierung des Funktionsgargeschirrs wird nach einer erkannten Aktivierung der Bedienelektronik überprüft, wenn sich die Bedienelektronik im Standby-Modus befindet. Anschließend wird die Bedienelektronik angeschaltet, wenn eine zulässige Betriebslage erkannt wird oder die Bedienelektronik verbleibt im Standby-Modus, wenn aufgrund einer unzulässigen Betriebslage auf eine versehentliche Aktivierung der Bedienelektronik geschlossen werden kann.

Die Überprüfung der Betriebslage erfolgt dabei insbesondere mittels des wenigstens einen Lagesensor, sodass zuverlässig eine bestimmte Lage erkannt werden kann.

Die Auswertung der Lage bzw. der Orientierung in Bezug auf eine zulässige oder unzulässige Betriebslage erfolgt insbesondere durch die Steuereinrichtung.

Eine Aktivierung der Bedienelektronik erfolgt dabei insbesondere durch das Betätigen der Bedieneinrichtung und/oder je nach Ausgestaltung vorzugsweise auch durch eine Bewegung des Funktionsgargeschirrs. Insbesondere kann die Bedieneinrichtung einen Ein-/Aus-Schalter umfassen, welcher vorzugsweise weitere Bedienfunktionen aktiviert bzw. bei Vorhandensein eines Displays dieses aktiviert.

Wird das Funktionsgargeschirr nach erkannter Aktivierung angeschaltet, werden zusätzliche bzw. weitere Funktionen freigeschaltet bzw. es wird je nach Ausgestaltung auch eine Kommunikation mit einem Kochfeld oder dergleichen initiiert.

Da von einem Funktionsgargeschirr nach einer Aktivierung mehr Energie verbraucht wird als im Standby-Modus, ist es von Vorteil, dass eine Aktivierung nur dann erfolgt, wenn eine solche auch vom Benutzer angefordert wird. Damit kann die Nutzbarkeit des Funktionsgargeschirrs verlängert werden.

Durch ein Funktionsgargeschirr wird insbesondere ein Sensorgeschirr bzw. ein sogenanntes "smartes" Gargeschirr zur Verfügung gestellt, welches bestimmte Sensoren insbesondere für Automatikkochprogramm oder auch Kommunikationssysteme zur Verbindung mit beispielsweise einem Kochfeld oder auch anderen Haushaltsgeräten bereitstellt.

Eine Bedieneinrichtung kann vorzugsweise einen Touchsensor, ein Touchscreen oder dergleichen umfassen oder dadurch bereitgestellt werde. Insbesondere wird dann ein Display beim Anschalten der Bedienelektronik hinterleuchtet und/oder es werden weitere Funktionen angezeigt bzw. freigegeben.

Ein Lagesensor kann vorzugsweise durch wenigstens einen Gyrosensor bereitgestellt werden und/oder wenigstens einen Gyrosensor umfassen.

Die Kommunikationseinrichtung eignet sich insbesondere zur Verbindung bzw. Kommunikation mit anderen Haushaltsgeräten, wobei bei dem Funktionsgargeschirr insbesondere eine Verbindung mit einem Kochfeld zweckmäßig war. Dabei kann die Kommunikation insbesondere über eine kabellose Verbindung hergestellt werden, beispielsweise über Bluetooth, WLAN, NFC oder auch andere geeignete Verbindungsmethoden.

Als Energiespeicher ist insbesondere wenigstens eine Batterie und/oder wenigstens ein Akku vorgesehen. Besonders bevorzugt ist die Verwendung von wenigstens einer Permanentbatterie, welche insbesondere eine sehr lange ausgerichtete Verwendungszeit haben. So kann insbesondere eine Permanentbatterie mit einer prognostizierten Laufzeit von ca. 10 Jahren eingesetzt werden.

In zweckmäßigen Weiterbildungen umfasst das Funktionsgargeschirr wenigstens einen Schwingungssensor und/oder wenigstens ein Beschleunigungssensor, insbesondere einen 3-Achsen-Beschleunigungssensor. So kann vorzugsweise die Bewegung und/oder die Orientierung des Gargeschirrs ermittelt werden.

Das erfindungsgemäße Verfahren bietet viele Vorteile. Ein erheblicher Vorteil ist, dass der Energiebedarf reduziert und somit die Lebensdauer des verwendeten Energiespeichers erheblich erhöht werden kann, da das unnötige bzw. unbeabsichtigte Anschalten der Bedieneinrichtung bzw. der Bedienelektronik vermieden wird.

So kann es insbesondere vermieden werden, dass das Gargeschirr versehentlich durch einen Benutzer beim Herausnehmen des Funktionsgargeschirrs aus einem Schrank oder in ähnlichen Situationen aktiviert wird, z. B. wenn ein Benutzer versehentlich die Bedieneinrichtung berührt. Zudem können auch andere zufällige Aktivierungsereignisse, beispielsweise das ungewollte Aktivieren der Bedienelektronik beispielsweise durch Laugentropfen in der Spülmaschine, vermieden werden.

Bevorzugt wird die Aktivierung der Bedienelektronik durch die Betätigung der Bedieneinrichtung und/oder durch eine Bewegung des Funktionsgargeschirrs erkannt. So kann beispielsweise zur Aktivierung ein Benutzer auf einen Ein-/Aus-Schalter der Bedieneinrichtung drücken, versehentlich oder absichtlich, wodurch die nach dem die Aktivierung versehentlich oder absichtlich je nach des Kochgeschirrs geschaltet wird. Je nach Ausgestaltung kann aber auch die Aktivierung anhand einer Bewegung des Gargeschirrs erkannt werden, sodass über die Bewegung in eine vorbestimmten Lage z. B. auch ein Ein- und Ausschalten bewirkt werden kann. Je nach Ausgestaltung kann auch allein die Berührung bzw. eine Wischgeste über eine Touchbedienung ausreichen, um ein versehentliches Aktivieren zu bewirken.

Je nach vorgesehener Sensoren kann beispielsweise auch vorzugsweise erkannt werden, ob bei der Bewegung des Gargeschirrs die Bedienelektronik bereits angeschaltet oder noch ausgeschaltet ist. Ist die Bedienelektronik bei einer Bewegung des Gargeschirrs ausgeschaltet, wird das Gargerät wahrscheinlich aus dem Schrank genommen oder es wird anders bewegt. Dann kann vorgesehen sein, dass und ohne eine weitere Aktivierung die Bedienelektronik ausgeschaltet bleibt. Ist sie Bedienelektronik während einer Bewegung bereits angeschaltet, kann die Steuereinrichtung z. B. darauf schließen, dass das Gargeschirr auf dem Kochfeld verschoben wird, und die Bedienelektronik bleibt je nach Entwicklung der Lage beispielsweise angeschaltet.

Besonders bevorzugt wird bei aktivierter Bedienelektronik bei einer Bewegung des Gargeschirrs bzw. eines Topfes oder dergleichen überprüft, ob die Bedienelektronik in den Standby-Modus wechseln kann. So kann beispielsweise das reine Verschieben mit oder ohne Anheben des Topfes dazu vorgesehen sein, den Topf lediglich in der Position auf dem Kochfeld zu verschieben, um den Kochvorgang fortzusetzen. Wird der Topf beim Verschieben angehoben, kann es je nach Lageentwicklung aber auch dazu kommen, dass er abseits eines Kochfeldes abgestellt wird, sodass auf das Ausschalten der Bedienelektronik vorgesehen werden kann. Je nach Beschleunigung, Lageentwicklung, Entwicklung der Orientierung und/oder dergleichen wird vorzugsweise die Bedienelektronik deaktiviert, um eine Energie möglichst gut zu sparen, sodass die der Energiespeicher möglichst lange Lebenszeit aufweist.

In zweckmäßigen Ausgestaltungen ist eine unzulässige Betriebslage eine vorbestimmte Schräglage des Bodens des Funktionsgargeschirrs, eine vorbestimmte Beschleunigung und/oder eine vorbestimmte Orientierung. Eine vorbestimmte unzulässige Orientierung kann beispielsweise dann vorliegen, wenn die Öffnung eines Funktionsgargeschirrs nach unten zeigt. Dann kann die Steuereinrichtung beispielsweise darauf schließen, dass ein Funktionsgargeschirr bzw. ein Topf zum Abtropfen nach einem Spülvorgang auf einem Abtropfbereich aufliegt und/oder dass der Topf in eine Spülmaschine eingestellt wurde. Dann kann eine Aktivierung der Bedienelektronik vorzugsweise für eine vorbestimmte Zeit unterbunden werden.

In vorteilhaften Ausgestaltungen kommuniziert die Kommunikationseinrichtung wenigstens zeitweise mit einem anderen Haushaltgerät und/oder einer anderen Kommunikationseinheit. Ein anderes Haushaltgerät, welches mit einem Funktionsgargeschirr kommunizieren kann, kann beispielsweise eine Spülmaschine sein. Fall eine Spülmaschine selbst keine Kommunikationseinrichtung umfasst, kann vorzugsweise eine separate Kommunikationseinheit vorgesehen werden, welche auch z. B. in Verbindung mit einem Schrank oder dergleichen verwendet werden kann.

Bevorzugt kommuniziert die Kommunikationseinrichtung wenigstens zeitweise, wenn sich die Bedienelektronik bzw. das Funktionsgargeschirr im Standby-Modus befindet. Dann kann beispielsweise ein Funktionsgargeschirr von der Kommunikationseinrichtung einer Spülmaschine oder auch einer separaten Kommunikationseinheit den Hinweis empfangen, dass für die Dauer des Spülvorgangs oder bis zum Entnehmen des Gargeschirrs aus einem Schrank eine Aktivierung nicht vorgesehen ist.

Besonders bevorzugt wird die Lage und/oder die Orientierung des Funktionsgargeschirrs an das Haushaltgerät übermittelt, wobei je nach Lage und oder Orientierung ein Hinweis ausgegeben wird. So ist es beispielsweise bei der Kommunikation zwischen Spülmaschine und Gargeschirr möglich, dass die Spülmaschine erkennt, wenn ein Funktionsgargeschirr nicht mit der Öffnung nach unten in die Spülmaschine eingestellt wird. Dann kann vorzugsweise ein Hinweis ausgegeben werden, der den Benutzer darauf hinweist, dass das Funktionsgargeschirr nicht korrekt in die Spülmaschine eingestellt ist.

Das erfindungsgemäße Funktionsgargeschirr ist insbesondere als Topf, Pfanne, Bräter oder dergleichen ausgebildet und umfasst wenigstens eine Bedienelektronik, wobei die Bedienelektronik wenigstens eine Bedieneinrichtung, wenigstens eine Kommunikationseinrichtung, wenigstens eine Steuereinrichtung, wenigstens an Lagesensor und wenigstens einen Energiespeicher umfasst. Dabei ist die Steuereinrichtung dazu geeignet und ausgebildet, ein Verfahren auszuführen, wie es zuvor beschrieben wurde.

Insbesondere umfasst das Funktionsgargeschirr wenigstens ein Schwingungssensor und/oder wenigstens einen Beschleunigungssensor, vorzugsweise wenigstens einen 3-Achsen-Beschleunigungssensor.

Auch das erfindungsgemäße Funktionsgargeschirr bietet die Vorteile, wie sie zuvor schon zu dem erfindungsgemäßen Verfahren ausgeführt wurden.

Weitere Vorteile und Merkmale der vorliegenden Erfindung ergeben sich aus den Ausführungsbeispielen, welche im Folgenden mit Bezug auf die beiliegenden Figuren erläutert werden.

In den Figuren zeigen:
- Figur 1: eine rein schematische Darstellung eines Ausführungsbeispiels eines erfindungsgemäßen Funktionsgargeschirrs in einer perspektivischen Ansicht;
- Figur 2: eine rein schematische Darstellung eines weiteren Ausführungsbeispiels eines erfindungsgemäßen Funktionsgargeschirrs in einer perspektivischen Ansicht;
- Figur 3: eine rein schematische Darstellung eines anderen Ausführungsbeispiels eines erfindungsgemäßen Funktionsgargeschirrs in einer perspektivischen Ansicht; und
- Figur 4: eine rein schematische Darstellung von möglichen Verfahrensabläufen gemäß des erfindungsgemäßen Verfahrens.

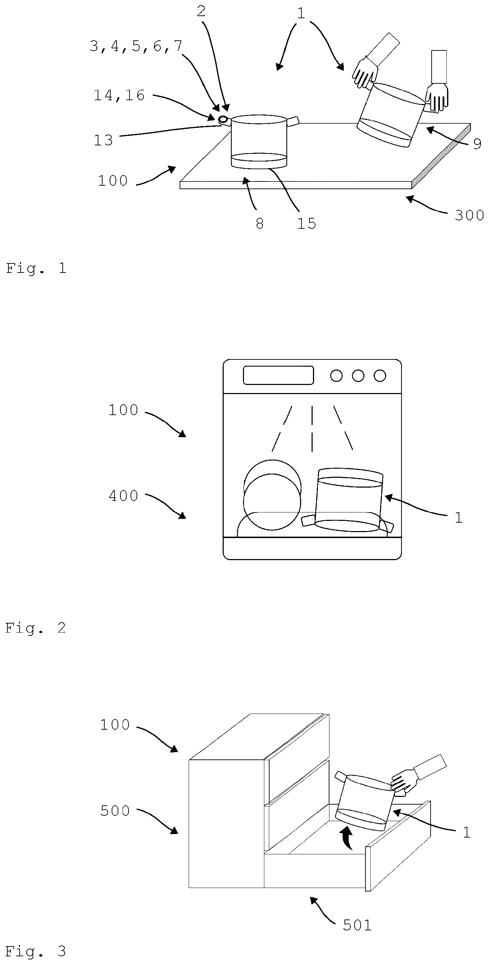

In Figur 1 ist rein schematisch ein erfindungsgemäßes Funktionsgargeschirr 1 dargestellt, welches hier auf ein Haushaltgerät 100 bzw. ein Kochfeld 300 aufgestellt ist. In Figur 1 ist ein weiteres erfindungsgemäßes Funktionsgargeschirr 1 dargestellt, welches von einem Benutzer gerade angehoben wird.

Das erfindungsgemäße Funktionsgargeschirr 1 umfasst eine Bedienelektronik 2, welche in dem hier gezeigten Ausführungsbeispiel vollständig in den Griff 13 des Funktionsgargeschirrs 1 integriert ist. Dabei umfasst die Bedienelektronik 2 eine Bedieneinrichtung 3, eine Steuereinrichtung 4, eine Kommunikationseinrichtung 5, einen Lagesensor 6 und einen Energiespeicher 7.

Je nach Ausgestaltung kann die Bedienelektronik 2 auch weitere Komponenten aufweisen und auch wenigstens teilweise an einem anderen Installationsort vorgesehen sein. So können die einzelnen Komponenten z. B. auf beide Griffe des Gargeschirrs 1 aufgeteilt werden oder es können Komponenten auch im Bodenbereich des Gargeschirrs 1 vorgesehen sein.

Die Bedienungsrichtung 3 umfasst in dem hier gezeigten Ausführungsbeispiel ein Touch-Display 14, an welchem hier ein Ein-/Ausschalter vorgesehen ist, über welchen ein Benutzer bei Bedarf die Bedienelektronik 2 bzw. die Bedieneinrichtung 3 aktivieren kann, wodurch die Bedienelektronik 2 angeschaltet wird.

Die Kommunikationseinrichtung 5 dient dazu, bei dem hier gezeigten Funktionsgargeschirr 1 eine Kommunikation mit dem Kochfeld 300 zu ermöglichen, sodass beispielsweise über das Funktionsgargeschirr 1 ein Garvorgang einstellbar ist und/oder auch Automatikprogramme durchgeführt werden können. Dazu können an dem Funktionsgargeschirr 1 beispielsweise Sensoren vorgesehen sein, mittels welcher der Garprozess innerhalb des Funktionsgargeschirrs 1 überwacht wird.

Mittels des Lagesensors 6 kann im Falle einer Aktivierung der Bedienelektronik 2 durch die Steuereinrichtung 4 überprüft werden, ob die Aktivierung bzw. das Anschalten der Bedienelektronik 2 tatsächlich beabsichtigt ist. Dazu wird im Falle einer Aktivierung der Bedienelektronik 2 überprüft, ob sich das Funktionsgargeschirr 1 in einer zulässigen Betriebslage 8 oder einer unzulässigen Betriebslage 9 befindet.

Im hier gezeigten Ausführungsbeispiel ist eine zulässige Betriebslage 8 des Funktionsgargeschirrs 1 eine solche Lage, in welcher der Boden 15 des Funktionsgargeschirrs in einer im Wesentlichen horizontalen Ausrichtung vorliegt. Dann kann mittels der Steuereinrichtung 4 aufgrund der Lage 8 darauf geschlossen werden, dass das Funktionsgargeschirr 1 auf dem Kochfeld 300 aufgestellt ist und betrieben werden soll. Eine Situation mit einer zulässigen Betriebslage 8 ist in Figur 1 mit dem auf dem Kochfeld 300 aufstehenden Funktionsgargeschirr 1 dargestellt.

Daneben ist eine unzulässige Betriebslage 9 dargestellt, in welcher der Topf bzw. das Funktionsgargeschirr 1 bzw. der Boden 15 sich nicht in einer im Wesentlichen horizontalen Lage befindet. In einer solchen unzulässigen Betriebslage 9 kann die Steuereinrichtung 4 darauf schließen, dass die Bedienelektronik 2 versehentlich betätigt wurde. Dann bleibt die Bedienelektronik 2 im Standby-Modus und wird nicht eingeschaltet.

Die Position des Funktionsgargeschirrs 1 bzw. die Überprüfung der Betriebsanlagen 8, 9 wird mittels des Lagesensors 6 erreicht. Dazu kann beispielsweise ein Gyrosensor verwendet werden, oder beispielsweise auch ein Schwingungssensor 11 und/oder auch ein Beschleunigungssensor 12 verwendet werden, insbesondere ein 3-Achsen-Beschleunigungssensor 12.

Durch das erfindungsgemäße Funktionsgargeschirr 1 und das erfindungsgemäße Verfahren zum Betreiben eines solchen Funktionsgargeschirrs 1 wird es möglich, den Energieverbrauch des Funktionsgargeschirrs 1 erheblich zu reduzieren. Dies resultiert daraus, dass eine versehentliche Aktivierung der Bedienelektronik 2 nicht zum Anschalten der Bedienelektronik führt, was einen erhöhten Energieverbrauch bewirken würde. Im Standby-Modus der Bedienelektronik 12 wird insbesondere mittels der Steuereinrichtung 4 überprüft, ob eine versehentliche oder eine bewusste Aktivierung erfolgt ist.

Dies erfolgt über das Auswerten einer Betriebslage 8, 9 des Funktionsgargeschirrs 1. Dies ist wichtig, da das Funktionsgargeschirr 1 mit Energie versorgt werden muss. Dazu ist ein Energiespeicher 7 vorgesehen, welcher in dem hier gezeigten Ausführungsbeispiel als Batterie 16 bzw. Permanentbatterie ausgebildet ist. Um genug Energie für eine vorbestimmte Lebenserwartung des Funktionsgargeschirrs 1 zur Verfügung zu stellen bzw. um Aufladevorgänge und/oder auch bzw. Wechsel des Energiespeichers 7 möglichst zu vermeiden, muss eine ungewollte Aktivierung der Bedienelektronik 2 möglichst vermieden werden.

In Figur 2 rein schematisch ein erfindungsgemäßes Funktionsgargeschirr 1 dargestellt, welches wie die Funktionsgargeschirre 1 gemäß Figur 1 aufgebaut sind. Dabei ist das Funktionsgargeschirr hier in ein Haushaltgerät 100 bzw. eine Spülmaschine 400 eingestellt.

Damit beim Spülvorgang beispielsweise durch Laugentropfen nicht versehentlich die Bedienelektronik 2 aktiviert wird und die Bedienelektronik dadurch nicht angeschaltet wird, wird in dem hier gezeigten Ausführungsbeispiel durch das Einstellen des Funktionsgargeschirrs 1 mit der Öffnung nach unten eine unzulässige Betriebslage 9 erkannt, sodass sie Bedienelektronik 2 nicht angeschaltet wird.

Hier ist die Spülmaschine 400 auch zur Kommunikation mit anderen Haushaltgeräten 100 und insbesondere mit dem Funktionsgargeschirr 1 ausgebildet. Je nach Ausgestaltung kann dann auch vorgesehen sein, dass das Haushaltgerät 100 bzw. die Spülmaschine 400 erkennt, dass ein Funktionsgargeschirr 1 in die Spülmaschine 400 eingestellt wird.

Dann wird überprüft, in welcher Orientierung das Funktionsgargeschirr 1 bzw. in dem hier gezeigten Ausführungsbeispiel der Topf in die Spülmaschine 400 eingestellt wurde. Wurde das Funktionsgargeschirr 1 nicht mit der Öffnung nach unten eingestellt, kann z. B. durch die Spülmaschine ein Hinweis an den Benutzer ausgegeben werden.

Zudem ist es je nach Ausgestaltung möglich, dass die Spülmaschine 400 dem Funktionsgargeschirr 1 im Standby-Modus mitteilt, dass das Funktionsgargeschirr 1 in die Spülmaschine 400 eingestellt wird, vorzugsweise auch wie lange Programmdauer ist und dass dem Funktionsgargeschirr 1 mitgeteilt wird, dass der Standby-Modus eine vorbestimmte Zeit nicht verlassen werden muss bzw. darf.

In Figur 3 ist rein schematisch dargestellt, dass eine unzulässige Betriebslage 9 auch dann erkannt werden kann, wenn ein Benutzer beispielsweise beim Herausnehmen des Topfes aus einem Möbel 500 oder einer Schublade 501 versehentlich die Bedienelektronik 2 berührt. Auch hier soll vermieden werden, dass die Bedienelektronik 2 angeschaltet wird, um Energie zu sparen.

Dabei ist in hier dargestellt, dass auch in einer solchen Situation eine Kommunikationseinheit 200 an dem Möbel 500 bzw. an der Schublade 501 vorgesehen sein kann, sodass auch hier dem Funktionsgargeschirr 1 mitgeteilt werden kann, dass es in Abstellposition überführt wird und dass es somit den Standby-Modus nicht verlassen muss bzw. darf.

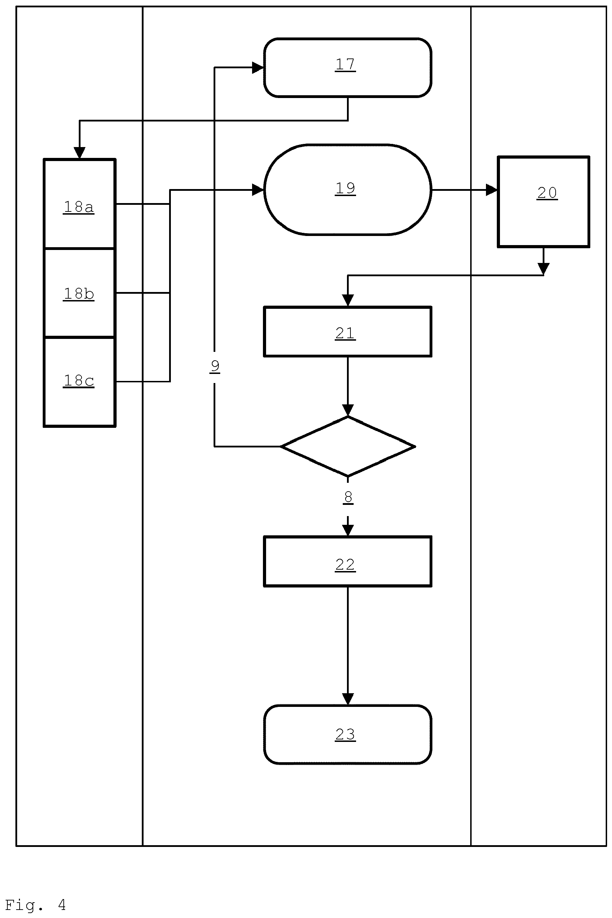

In Figur 4 ist rein schematisch ein Ablaufschema für ein erfindungsgemäßes Verfahren dargestellt. Dabei befindet sich das Funktionsgargeschirr 1 im ersten gezeigten Verfahrensschritt 17 im Standby-Modus, wobei die Bedienelektronik 2 in diesem Zustand auf das Einschalten wartet.

Die Schritte 18a, 18b und 18c zeigen beispielhaft drei verschiedene Situationen, in welchen die Bedienelektronik 2 aktiviert wird. Dabei wird im Verfahren Schritt 18a die Ein-/Austaste bewusst durch den Benutzer betätigt. Der Verfahren Schritt 18b zeigt eine versehentliche Berührung der Ein-/Austaste, beispielsweise beim Greifen des Funktionsgargeschirrs am Griff bzw.

Herausnehmen aus der Küchenschublade 501 oder dergleichen. Der Verfahrensschritt 18c zeigt die versehentliche Betätigung der Ein-/Austaste beispielsweise durch Spüllauge beim Spülvorgang in einer Spülmaschine.

Unabhängig von dem Vorliegen des Schritts 18a, 18b oder 18c wird in allen in Verfahrensschritt 19 eine Betätigung der Ein-/Austaste bzw. eine Aktivierung der Steuerelektronik 2 durch die Steuereinrichtung 4 erkannt. In den drei gezeigten Situationen kommt es nun zur Erfassung der Lage bzw. der Orientierung und/oder der Beschleunigung des Funktionsgargeschirrs 1, insbesondere mittels des Lagesensors 6, im Verfahrensschritt 20.

In Schritt 21 prüft die Steuereinrichtung anhand der Daten des Lagesensors, ob eine zulässige Betriebslage 8 oder eine unzulässige Betriebslage 9 vorliegt.

Liegt eine unzulässige Betriebslage 9 vor, bleibt das Funktionsgargeschirr 1 bzw. die Bedienelektronik 2 im Standby-Modus (Verfahrensschritt 17).

Wird erkannt, dass eine zulässige Betriebslage 8 vorliegt, wird die Bedienelektronik 2 eingeschaltet (Schritt 22). Ist dies der Fall, werden beispielsweise je nach Ausgestaltung Anzeigeelemente hinterleuchtet und es werden weitere Sensortasten beispielsweise für Assistenzfunktion freigegeben. Dann kann unter anderem der Verfahrensschritt 23 eingeleitet werden, welche beispielsweise das Starten von einem assistierten Kochvorgang ist.

### Bezugszeichenliste

- 1: Funktionsgargeschirrs
- 2: Bedienelektronik
- 3: Bedieneinrichtung
- 4: Steuereinrichtung
- 5: Kommunikationseinrichtung
- 6: Lagesensor
- 7: Energiespeicher
- 8: zulässige Betriebslage
- 9: unzulässige Betriebslage
- 10: Boden
- 11: Schwingungssensor
- 12: (Drei-Achsen-) Beschleunigungssensor
- 13: Griff
- 14: Touch-Display
- 15: Boden
- 16: Batterie/Permanentbatterie
- 17: Verfahrensschritt
- 18: Verfahrensschritt
- 19: Verfahrensschritt
- 20: Verfahrensschritt
- 21: Verfahrensschritt
- 22: Verfahrensschritt
- 100: Haushaltgerät
- 200: Kommunikationseinheit
- 300: Kochfeld
- 400: Spülmaschine
- 500: Möbel
- 501: Schublade

## Patentansprüche

1. Verfahren zum Betreiben eines Funktionsgargeschirrs (1), wobei das Funktionsgargeschirr (1) wenigstens eine Bedienelektronik (2) umfasst, wobei die Bedienelektronik (2) wenigstens eine Bedieneinrichtung (3), wenigstens eine Steuereinrichtung (4), wenigstens eine Kommunikationseinrichtung (5), wenigstens einen Lagesensor (6) und wenigstens einen Energiespeicher (7) umfasst, **gekennzeichnet durch die folgenden Schritte,**
- Überprüfung der Lage und/oder der Orientierung des Funktionsgargeschirrs (1) nach einer erkannten Aktivierung der Bedienelektronik (2), wenn sich die Bedienelektronik (2) im Standby-Modus befindet;
- Anschalten der Bedienelektronik (2), wenn eine zulässige Betriebslage (8) erkannt wird;
oder
- Verbleiben im Standby-Modus, wenn aufgrund einer unzulässigen Betriebslage (9) auf eine versehentliche Aktivierung der Bedienelektronik (2) geschlossen werden kann.

2. Verfahren nach Anspruch 1, **dadurch gekennzeichnet, dass** die Aktivierung durch die Betätigung der Bedienelektronik (2) durch die Betätigung der Bedieneinrichtung (3) und/oder durch eine Bewegung des Funktionsgargeschirrs (1) erkannt wird.

3. Verfahren nach einem der vorhergehenden Ansprüche, **dadurch gekennzeichnet, dass** bei aktivierter Bedienelektronik (2) bei einer Bewegung des Funktionsgargeschirrs (1) überprüft wird, ob die Bedienelektronik (2) in den Standby-Modus wechseln kann.

4. Verfahren nach einem der vorhergehenden Ansprüche, **dadurch gekennzeichnet, dass** eine unzulässige Betriebslage (9) eine vorbestimmte Schräglage des Bodens (10) des Funktionsgargeschirrs (1), eine vorbestimmte Beschleunigung und/oder eine vorbestimmte Orientierung ist.

5. Verfahren nach einem der vorhergehenden Ansprüche, **dadurch gekennzeichnet, dass** die Kommunikationseinrichtung (5) wenigstens zeitweise mit einem anderen Haushaltgerät (100) und/oder einer anderen Kommunikationseinheit (200) kommuniziert.

6. Verfahren nach dem vorhergehenden Anspruch, **dadurch gekennzeichnet, dass** die Kommunikationseinrichtung (5) wenigstens zeitweise im Standby-Modus der Bedienelektronik (2) kommuniziert.

7. Verfahren nach einem der beiden vorhergehenden Ansprüche, **dadurch gekennzeichnet, dass** die Lage und/oder die Orientierung des Funktionsgargeschirrs (1) an das Haushaltgerät (100) und/oder die Kommunikationseinheit (200) übermittelt wird und dass je nach Lage und/oder Orientierung des Funktionsgargeschirrs (1) ein Hinweis ausgegeben wird.

8. Funktionsgargeschirrs (1) umfassend wenigstens eine Bedienelektronik (2), wobei die Bedienelektronik (2) wenigstens eine Bedieneinrichtung (3), wenigstens eine Steuereinrichtung (4), wenigstens eine Kommunikationseinrichtung (5), wenigstens einen Lagesensor (6) und wenigstens einen Energiespeicher (7) umfasst,
**dadurch gekennzeichnet,**
**dass** die Steuereinrichtung (4) dazu geeignet und ausgebildet ist, ein Verfahren nach einem der vorhergehenden Ansprüche auszuführen.
